# EUROPÄISCHE PATENTSCHRIFT

(11) **EP 3 728 765 B1**
(45) Veröffentlichungstag und Bekanntmachung des Hinweises auf die Patenterteilung: **29.09.2021**
(21) Anmeldenummer: 18833203.5
(22) Anmeldetag: 19.12.2018
(51) Int. Cl.: E04H 12/10, E04H 12/18, F03D 13/20

(54) **GITTERMAST ALS TURM EINER WINDKRAFTANLAGE**
LATTICE MAST AS TOWER OF A WIND TURBINE
PYLÔNE COMME TOUR D'UNE ÉOLIENNE

(30) Priorität: 21.12.2017 DE 102017223624
(43) Veröffentlichungstag der Anmeldung: 28.10.2020
(73) Patentinhaber: GICON Grossmann Ingenieur Consult GmbH, 01219 Dresden (DE)
(72) Erfinder: GROSSMANN, Jochen, 01187 Dresden (DE); DAHLAUS, Frank, 76351 Linkenheim-Hochstetten (DE)
(74) Vertreter: Kailuweit & Uhlemann Patentanwälte Partnerschaft mbB
(86) Internationale Anmeldenummer: PCT/EP2018/085871
(87) Internationale Veröffentlichungsnummer: WO 2019/121935

(56) Entgegenhaltungen:
- EP-A1- 2 886 750
- WO-A1-2008/152101
- US-A1- 2016 261 019

## Beschreibung

Die Erfindung betrifft Gittermasten jeweils als Turm einer Windkraftanlage.

Eine Windenergieanlage mit einem teleskopierbaren Turm mit oben angeordneten Maschinenhaus und über eine Nabe angeflanschte Rotorblätter ist durch die Druckschrift EP 2 798 202 B1 als teleskopierbares Rotorblatt und teleskopierbarer Turm sowie Windenergieanlage und Windenergieanlagenpark bekannt. Der teleskopierbare Turm umfasst einen unteren Turmabschnitt und einen zugeordneten oberen Turmabschnitt, der wenigstens teilweise in den unteren Turmabschnitt versenkbar ist. Die beiden Turmabschnitte sind über einen Turmantrieb zueinander verschiebbar. Der Turmantrieb ist dazu wie ein Aufzugsantrieb ausgestaltet. Dabei ist zusätzlich ein Gegengewicht über ein Halteseil angeordnet. Die Turmabschnitte sind über den Turmantrieb miteinander verbunden. Weitere kraftübertragende und feste Verbindungen sind nicht vorgesehen, so dass Abmessungen und Gewichte beschränkt sind.

Die WO 2008/152101 A1 zeigt den Gittermast als Turm einer Windkraftanlage, wobei der Gittermast verschiedene Segmente aus rohrförmige Eckelemente mit an den Enden hervorstehenden Flanschen aus lösbar miteinander verbundenen Teilen aufweist. Dabei sind die Eckelemente durch Querstäbe lösbar miteinander verbunden. Aus der Schrift geht auch ein Verfahren zum Zusammenbau des Turms aus den einzelnen Segmenten hervor.

Das Dokument US 2016/261019 A1 offenbart eine mobile Telekommunikationseinheit aus der Nachrichtentechnik für die Anordnung von Antennen, die aus Gittermasten und Plattformen aufgebaut ist. Dabei können relativ zueinander beweglich gelagerte teleskopierbare Turmsegmente in verschiedene Positionen ein- und ausgefahren werden.

In der EP 2 886 750 A1 wird eine Gittermastabdeckung für eine Windkraftanlage beschrieben. Dabei weist die Anlage Gittermastbaugruppen mit einer Vielzahl von miteinander verbundenen Strukturelementen auf.

Die Druckschrift WO 2013/083854 A1 offenbart ein Montageverfahren für einen Teleskopmast und Mittel zur Durchführung des Verfahrens. Der Teleskopmast besteht dazu aus Hubsegmenten die ineinander fahrbar sind. Die Querschnittflächen sind somit von Hubsegment zu Hubsegment kleiner. Die Hubvorrichtung kann aus einem Getriebemotor mit Zahnrad-Zahnstange-Kopplung oder Hydraulikzylindern bestehen.

Der im Patentanspruch 1 angegebenen Erfindung liegt die Aufgabe zugrunde, einen insbesondere hohen Turm einer Windkraftanlage so bereitzustellen, dass eine Wartung aber auch eine Montage oder Demontage der Aggregate im Maschinenhaus und der Rotorblätter einfach durchführbar sind.

Diese Aufgabe wird mit den im Patentanspruch 1 aufgeführten Merkmalen gelöst.

Die Gittermasten jeweils als Turm einer Windkraftanlage zeichnen sich insbesondere dadurch aus, dass eine Wartung aber auch eine Montage oder Demontage der Aggregate im Maschinenhaus und der Rotorblätter auch eines hohen Turms einfach durchführbar ist.

Dazu weist der Gittermast rohrförmige zweiteilige Stützen aus lösbar miteinander verbundenen Teilen auf, wobei die zwei Teile bei ihrer Verbindung in den Stützenachsen fortlaufend einachsig angeordnet sind. Die Stützen sind darüber hinaus schräg in Richtung von der Standfläche des Turms weg mit sich verkleinernden Querschnittfläche zueinander angeordnet. Weiterhin weist der Gittermast einen ersten führenden Bestandteil und einen zweiten im ersten Bestandteil geführten Bestandteil auf. Der erste Bestandteil besitzt eine Einrichtung mit mehreren in den Ecken eines Mehrecks angeordneten Schienen als Kletterrahmen zum Führen wenigstens eines Führungselements des zweiten Bestandteils. Das Führungselement ist über wenigstens eine Klettereinrichtung mit Kopplungen mit den Schienen des Kletterrahmens verbunden. Weiterhin weist der erste Bestandteil ein Element zum Tragen des Endes oder des Endenbereichs des zweiten Bestandteils in der Endposition und damit Betriebsposition der Windkraftanlage auf.

Vorteilhafterweise besitzt ein Gittermast gegenüber einen bekannten Stahlrohrturm einen geringeren Materialbedarf und eine höhere Eigendämpfung.

Zur gefahrlosen oder gefahrverminderten Wartung der Aggregate im Maschinenhaus und der Rotorblätter kann die Höhe des Gittermastes einfach verringert werden. Neben der Wartung kann das natürlich auch die Montage oder die Demontage dieser Teile einschließlich des Maschinenhauses betreffen. Damit können sehr hohe Türme für Windkraftanlagen realisiert werden. Dazu sind die zweiteiligen schräg angeordneten Stützen bei Verbindung fluchtend zueinander angeordnet. Damit ist eine progressive Anordnung als axiale Fortführung der Stützenachsen vorhanden.

Vorteilhafte Ausgestaltungen der Erfindung sind in den Patentansprüchen 2 bis 11 angegeben.

Die Klettereinrichtung weist optional wenigstens einen hydraulischen Schubmotor auf. Dieser kann einfachwirkend oder doppeltwirkend ausgeführt sein.

Die Schiene kann vorteilhafterweise eine Profilschiene sein.

Die Kopplung als eine bewegliche Kopplung kann in einer Ausführungsform ein Gleitkörper auf der Schiene und/oder wenigstens bereichsweise in der Schiene jeweils mit mindestens einer lösbaren Arretierung sein.

Optional ist oder sind die Arretierung als eine mechanische Vorrichtung zum Feststellen des Gleitkörpers jeweils wenigstens eine Raste, ein Bolzen, eine Schraube, eine Klemmvorrichtung und/oder eine Spannvorrichtung. Die Arretierungen sind entsprechend der Schublänge des Schubmotors angeordnet, so dass diese in Verbindung mit dem Schubmotor die Hubhöhe des zweiten Bestandteils bestimmen.

Die Klettereinrichtung und die Kopplungen können in einer Ausführungsform eine Inchworm-Bewegungs-Einrichtung im Kletterrahmen sein. Dazu kann der wenigstens eine Schubmotor als Bestandteil des Führungselements ein erstes Gleitelement am feststehenden Teil und ein zweites Gleitelement am bewegten Teil des Schubmotors besitzen. Bei arretiertem ersten Gleitelement wird das zweite Gleitelement mittels des Schubmotors nach oben bewegt und arretiert. Nach gelöster Arretierung des ersten Gleitelements wird dieses mittels des Schubmotors nach oben bewegt und arretiert. Jetzt erfolgt wiederum bei gelöster Arretierung die Bewegung des zweiten Gleitelements. Das erfolgt wechselseitig solange, bis der zweite Bestandteil des Gittermastes seine Endposition erreicht hat. Die Höhe der Verschiebung wird so durch die Bewegungslänge des Schubmotors bestimmt. Das wechselseitige Klemmen mit dazwischen erfolgter Bewegung des jeweiligen Gleitelements führt zu einer Inchworm-Bewegung auch als Raupenbewegung bezeichnet.

Das Element zum Tragen des Endes oder des Endenbereichs des zweiten Bestandteils als Träger ist optional eine die Endenbereiche des ersten Bestandteils und des zweiten Bestandteils miteinander verbindendes und gleichzeitig kraftübertragendes Element in der Endposition und damit Betriebsposition der Windkraftanlage. Die dabei zu einer rohrförmigen Stütze lösbar miteinander verbundenen beiden Teile sind vorteilhafterweise bei ihrer Verbindung in den Stützenachsen fortlaufend einachsig angeordnet.

Der Gittermast kann optional wenigstens drei rohrförmige Stützen aufweisen, die mit einem Fachwerk und/oder Stäben miteinander verbunden sind. Dabei sind die Stütze des ersten Bestandteils und die Stütze des zweiten Bestandteils über mindestens eine Ankerplatte miteinander verbunden, wobei die Ankerplatte die ebenen Enden der Stütze des ersten Bestandteils und die ebene Fläche der Stütze des zweiten Teils miteinander verbindet, so dass die Druckkräfte der Stütze des zweiten Bestandteils über Scherkräfte in der Verbindung in die Stütze des ersten Bestandteils eingeleitet werden.

Der zweite Bestandteil ist optional der Träger eines Maschinenhauses einschließlich von Aggregaten und Rotorblättern der Windkraftanlage.

Die Stützen können vorteilhafterweise schräg zueinander angeordnet sein, wobei sich die durch die Stützen bestimmte Querschnittfläche des Turms in Richtung Maschinenhaus der Windkraftanlage verringert.

Ein Ausführungsbeispiel der Erfindung ist in den Zeichnungen jeweils prinzipiell dargestellt und wird im Folgenden näher beschrieben.

Es zeigen:
- Fig. 1: ein Gittermast als Turm einer Windkraftanlage,
- Fig. 2: ein Gittermast mit eingefahrenem zweiten Bestandteil,
- Fig. 3: eine Stoßausbildung bei der Verbindung des zweiten Bestandteils auf dem ersten Bestandteil des Gittermastes und
- Fig. 4: eine gelöste Verbindung der Bestandteile des Gittermastes.

Ein Gittermast 1 als Turm 1 einer Windkraftanlage besteht im Wesentlichen aus einem ersten führenden Bestandteil 2 und einem zweiten im ersten Bestandteil 2 geführten Bestandteil 3.

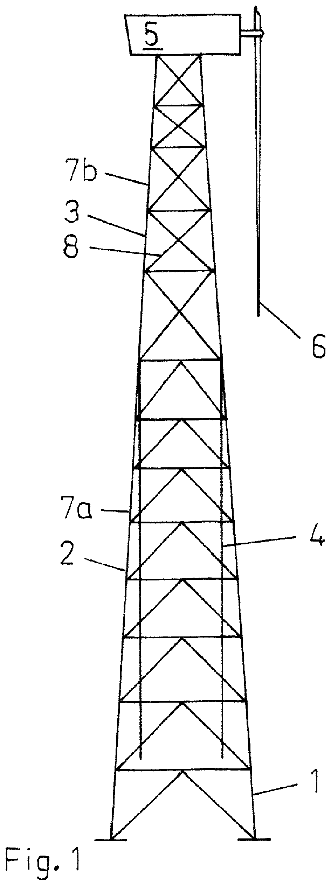

Die Fig. 1 zeigt einen Gittermast 1 als Turm 1 einer Windkraftanlage in einer prinzipiellen Darstellung.

Der erste Bestandteil 2 besitzt eine Einrichtung mit mehreren in den Ecken eines Mehrecks angeordneten Schienen 4 als Kletterrahmen zum Führen wenigstens eines Führungselements des zweiten Bestandteils 3. Das Führungselement ist über wenigstens eine Klettereinrichtung mit Kopplungen mit den Schienen 4 des Kletterrahmens verbunden. Der erste Bestandteil 2 weist ein Element 10 zum Tragen des Endes oder des Endenbereichs des zweiten Bestandteils 3 in der Endposition und damit Betriebsposition der Windkraftanlage auf. Der zweite Bestandteil 3 ist weiterhin der Träger des Maschinenhauses 5 einschließlich der Aggregate und der Rotorblätter 6 der Windkraftanlage. Aggregate sind im Wesentlichen der Maschinenstrang, die Nabe, das Getriebe, die Bremse, der Generator und die elektrische Ausrüstung.

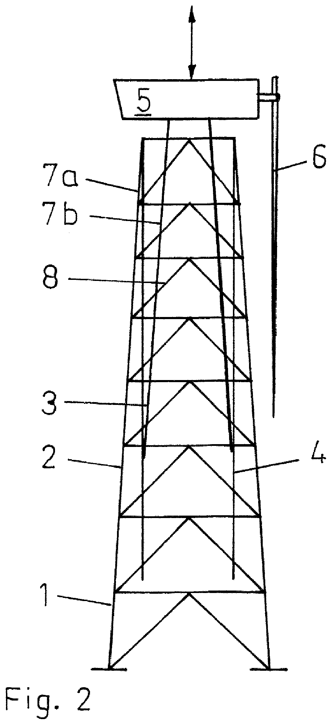

Die Fig. 2 zeigt einen Gittermast mit eingefahrenem zweiten Bestandteil in einer prinzipiellen Darstellung.

In der Fig. 2 ist der eingefahrene zweite Bestandteil 3 ohne Fachwerk zwischen den Stützen 7b gezeigt.

Mittels der Klettereinrichtung erfolgt die Höhenverstellung des zweiten Bestandteils 3 in Schritten, deren Länge durch die Bewegungslänge wenigstens eines hydraulischen Schubmotors bestimmt ist. Mittels lösbarer, beweglicher und arretierbarer Kopplungen in Form von Gleitkörpern auf der Schienen 4 und/oder wenigstens bereichsweise in den Schienen 4 erfdgt eine schrittweise Höhenverstellung. Die Höhe des Schrittes und damit des Hubes wird durch die Bewegungslänge des Schubmotors bestimmt. Letzterer kann dazu beispielsweise ein Hydraulikzylinder mit Kolben sein. Der Hydraulikzylinder kann dazu sowohl einfachwirkend als auch doppeltwirkend ausgeführt sein.

Die Gleitkörper besitzen jeweils eine Arretierung als eine mechanische Vorrichtung zum Feststellen des Gleitkörpers. Das kann dazu jeweils wenigstens eine Raste, ein Bolzen, eine Schraube, eine Klemmvorrichtung und/oder eine Spannvorrichtung sein. Die Arretierungen sind so entsprechend der Schublänge des Schubmotors und damit der Hubhöhe des Schubmotors angeordnet. Die Klettereinrichtung und die Kopplungen sind so eine Inchworm-Bewegungs-Einrichtung im Kletterrahmen.

Die Bewegung des zweiten Bestandteils 3 kann so sowohl aufwärts als auch abwärts erfolgen.

Das Element 10 zum Tragen des Endes oder des Endenbereichs des zweiten Bestandteils 3 ist als Träger eine die Endenbereiche des ersten Bestandteils 2 und des zweiten Bestandteils 3 miteinander verbindendes und gleichzeitig kraftübertragendes Element in der Endposition und damit Betriebsposition der Windkraftanlage.

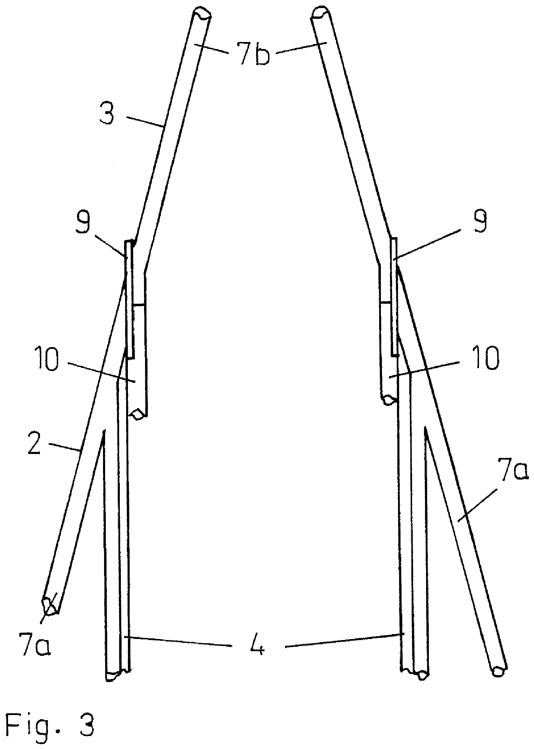

Die Fig. 3 zeigt eine Stoßausbildung bei der Verbindung des zweiten Bestandteils 3 auf dem ersten Bestandteil 2 des Gittermastes 1 in einer prinzipiellen Darstellung.

Der Gittermast 1 weist wenigstens vier rohrförmige Stützen 7 auf, die in den Eckpunkten eines Rechtecks, insbesondere Quadrats, angeordnet sind. Die Stützen sind schräg zueinander angeordnet, wobei sich die durch die Stützen bestimmte Querschnittfläche des Turms in Richtung Maschinenhaus der Windkraftanlage verringert. Weiterhin sind die Stützen 7 mit einem Fachwerk und/oder Stäben 8 miteinander verbunden. Die Stütze 7a des ersten Bestandteils 2 und die Stütze 7b des zweiten Bestandteils 3 sind über eine Ankerplatte 9 miteinander verbunden, wobei die Ankerplatte 9 die ebenen Enden der Stütze 7a des ersten Bestandteils 2 und die ebene Fläche der Stütze 7b des zweiten Bestandteils 3 miteinander verbindet. Die Stützen 7a, 7b als zweteilige Stützen 7 sind bei ihrer Verbindung als Stütze 7 in den Stützenachsen axial fortlaufend einachsig angeordnet. Damit sind diese fluchtend zueinander angeordnet. Mit der so vorhandenen Stoßausbildung werden die Druckkräfte der Stütze 7b des zweiten Bestandteils 3 über Scherkräfte in der Verbindung in die Stütze 7a des ersten Bestandteils 2 eingeleitet. Die lösbaren Verbindungen erfolgen mit bekannten Bolzenverbindungen, Schraubenverbindungen und/oder Klemmverbindungen. Die vertikal oder im Wesentlichen vertikal angeordneten Ankerplatten 9 gewährleisten, dass der zweite Bestandteil 2 in den ersten Bestandteil 2 eingefahren und dabei abgesenkt werden kann.

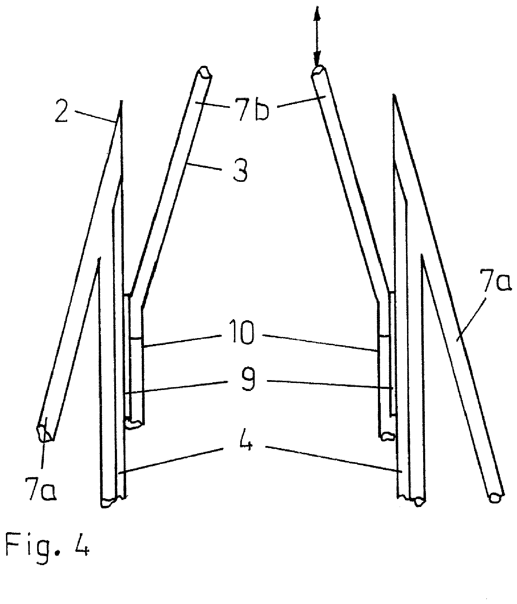

Die Fig. 4 zeigt eine gelöste Verbindung der Bestandteile 2, 3 des Gittermastes 1 in einer prinzipiellen Darstellung.

Der zweite Bestandteil 3 kann bereichsweise mittels der Klettereinrichtung aus oder in den ersten Bestandteil 2 verfahren werden. Die Verbindungen der Bestandteile 2, 3 sind als lösbare Verbindungen ausgebildet, so dass diese Bewegungen leicht realisierbar sind.

### Bezugszeichen

- 1: Gittermast, Turm
- 2: erster Bestandteil
- 3: zweiter Bestandteil
- 4: Schiene
- 5: Maschinenhaus
- 6: Rotorblatt
- 7: Stütze
- 8: Stab
- 9: Ankerplatte
- 10: Element

## Patentansprüche

1. Gittermast (1) als Turm (1) einer Windkraftanlage, wobei der Gittermast (1) rohrförmige zweiteilige Stützen (7) aus lösbar miteinander verbundenen Teilen aufweist, **dadurch gekennzeichnet, dass** die zwei Teile bei ihrer Verbindung in den Stützenachsen fortlaufend einachsig angeordnet sind, dass die Stützen (7) schräg in Richtung von der Standfläche des Turms (1) weg mit sich verkleinernden Querschnittfläche zueinander angeordnet sind, dass der Gittermast (1) einen ersten führenden Bestandteil (2) und einen zweiten im ersten Bestandteil (2) geführten Bestandteil (3) aufweist, dass der erste Bestandteil (2) eine Einrichtung mit mehreren in den Ecken eines Mehrecks angeordneten Schienen (4) als Kletterrahmen zum Führen wenigstens eines Führungselements des zweiten Bestandteils (3) besitzt, dass das Führungselement über wenigstens eine Klettereinrichtung mit Kopplungen mit den Schienen (4) des Kletterrahmens verbunden ist und dass der erste Bestandteil (2) ein Element (10) zum Tragen des Endes oder des Endenbereichs des zweiten Bestandteils (3) in der Endposition und damit Betriebsposition der Windkraftanlage aufweist.

2. Gittermast (1) nach Patentanspruch 1, **dadurch gekennzeichnet, dass** die Klettereinrichtung wenigstens einen hydraulischen Schubmotor aufweist.

3. Gittermast (1) nach Patentanspruch 1, **dadurch gekennzeichnet, dass** die Schiene (4) eine Profilschiene (4) ist.

4. Gittermast (1) nach Patentanspruch 1, **dadurch gekennzeichnet, dass** die Kopplung als eine bewegliche Kopplung ein Gleitkörper auf der Schiene (4) und/oder wenigstens bereichsweise in der Schiene (4) mit mindestens einer lösbaren Arretierung ist.

5. Gittermast (1) nach Patentanspruch 4, **dadurch gekennzeichnet dass** die Arretierung als eine mechanische Vorrichtung zum Feststellen des Gleitkörpers jeweils wenigstens eine Raste, ein Bolzen, eine Schraube, eine Klemmvorrichtung und/oder eine Spannvorrichtung ist oder sind.

6. Gittermast (1) nach den Patentansprüchen 2 und 4, **dadurch gekennzeichnet, dass** die Arretierungen entsprechend der Schublänge des Schubmotors angeordnet sind, so dass diese in Verbindung mit dem Schubmotor die Hubhöhe des zweiten Bestandteils (3) bestimmen.

7. Gittermast (1) nach Patentanspruch 1, **dadurch gekennzeichnet, dass** die Klettereinrichtung und die Kopplungen eine Inchworm-Bewegungs-Einrichtung im Kletterrahmen sind.

8. Gittermast (1) nach Patentanspruch 1, **dadurch gekennzeichnet, dass** das Element (10) zum Tragen des Endes oder des Endenbereichs des zweiten Bestandteils (3) als Träger ausgebildet ist und ein die Endenbereiche des ersten Bestandteils (2) und des zweiten Bestandteils (3) miteinander verbindendes und gleichzeitig kraftübertragendes Element in der Endposition und damit Betriebsposition der Windkraftanlage ist, wobei die zwei Teile der Stützen (7) bei ihrer Verbindung in den Stützenachsen fortlaufend einachsig angeordnet sind.

9. Gittermast (1) nach den Patentansprüchen 1 und 8, **dadurch gekennzeichnet, dass** der Gittermast (1) wenigstens drei rohrförmige Stützen (7) aufweist, die mit einem Fachwerk und/oder Stäben (8) miteinander verbunden sind, dass die Stütze (7a) des ersten Bestandteils (2) und die Stütze (7b) des zweiten Bestandteils (3) über mindestens eine Ankerplatte (9) miteinander verbunden sind, wobei die Ankerplatte (9) die ebenen Enden der Stütze (7a) des ersten Bestandteils (2) und die ebene Fläche der Stütze (7b) des zweiten Teils (3) miteinander verbindet, so dass die Druckkräfte der Stütze (7b) des zweiten Bestandteils (3) über Scherkräfte in der Verbindung mit der Ankerplatte (9) in die Stütze (7a) des ersten Bestandteils (2) eingeleitet werden.

10. Gittermast (1) nach Patentanspruch 1, **dadurch gekennzeichnet, dass** der zweite Bestandteil (3) der Träger eines Maschinenhauses (5) einschließlich von Aggregate und Rotorblätter (6) der Windkraftanlage ist.

11. Gittermast (1) nach den Patentansprüchen 1 und 10, **dadurch gekennzeichnet, dass** die Stützen (7) schräg zueinander so angeordnet sind, dass sich die durch die Stützen (7) bestimmte Querschnittfläche des Turms (1) in Richtung Maschinenhaus der Windkraftanlage verringert.

## Claims

1. Lattice mast (1) as a tower (1) of a wind turbine, wherein the lattice mast (1) has tubular two-part supports (7) made of parts that can be detachably connected to one another, **characterized in that** the two parts, as they are connected, are arranged continuously uniaxially in the supporting axes, **in that** the supports (7) are arranged obliquely to one another in the direction away from the standing surface of the tower (1) with a reducing cross-sectional area, **in that** the lattice mast (1) has a first guiding constituent part (2) and a second guiding constituent part (3) guided in the first guiding constituent part (2), wherein the first constituent part has a device having a plurality of rails (4) arranged in the comers of a polygon as a climbing frame for guiding at least one guiding element of the second constituent part (3), wherein the guiding element is connected via at least one climbing device having couplings to the rails (4) of the climbing frame, and
**in that** the first constituent part (2) has an element (10) for supporting the end or the end region of the second constituent part (3) in the end position and thus operating position of the wind turbine.

2. Lattice mast (1) according to claim 1, **characterized in that** the climbing device has at least one hydraulic thrust motor.

3. Lattice mast (1) according to claim 1, **characterized in that** the rail (4) is a profile rail (4).

4. Lattice mast (1) according to claim 1, **characterized in that** the coupling, as a movable coupling, is a sliding body on the rail (4) and/or at least regionally in the rail (4) with at least one releasable locking device.

5. Lattice mast (1) according to claim 4, **characterized in that** the locking device as a mechanical device for locking the sliding body is or are in each case at least one detent, a bolt, a screw, a clamping device and/or a tensioning device.

6. Lattice mast (1) according to claim 2 and 4, **characterized in that in that** the locking devices are arranged in accordance with the thrust length of the thrust motor so that, in conjunction with the thrust motor, they determine the lifting height of the second constituent part (3).

7. Lattice mast (1) according to claim 1, **characterized in that** the climbing device and the couplings are an inchworm movement device in the climbing frame.

8. Lattice mast (1) according to claim 1, **characterized in that** the element (10) for supporting the end or the end region of the second constituent part (3) as a support is an element connecting the end regions of the first constituent part (2) and the second constituent part (3) to each other and at the same time is a force transmitting element in the end position and thus operating position of the wind turbine, wherein the two parts of the supports (7) are arranged continuously uniaxially in the support axes when they are connected.

9. Lattice mast (1) according to claim 1 and 8, **characterized in that** the lattice mast (1) has at least three tubular supports (7) which are connected to one another by a lattice framework and/or rods (8), **in that** the support (7a) of the first constituent part (2) and the support (7b) of the second constituent part (3) are connected to one another via at least one anchor plate (9), wherein the anchor plate (9) connects the plane ends of the support (7a) of the first constituent part (2) and the plane surface of the support (7b) of the second constituent part (3) to each other, so that the compressive forces of the support (7b) of the second constituent part (3) are introduced into the support (7a) of the first constituent part (2) via shear forces in the connection with the anchor plate (9).

10. Lattice mast (1) according to claim 1, **characterized in that** the second constituent part (3) is a support of a nacelle (5) including aggregates and rotor blades (6) of the wind turbine.

11. Lattice mast (1) according to claim 1 and 10, **characterized in that** the supports (7) are arranged obliquely to one another in such a way that the cross-sectional area of the tower (1) determined by the supports (7) is reduced in the direction of the nacelle of the wind turbine.

## Revendications

1. Mât en treillis (1) en tant que tour (1) d'une éolienne, dans lequel le
mât en treillis (1) comporte des supports (7) tubulaires en deux parties, constitués de parties reliées l'une à l'autre de manière amovible, **caractérisé en ce que**
les deux parties sont disposées en continu de manière uniaxiale
lorsqu'elles sont reliées dans les axes de support, que les supports (7) sont disposés obliquement les uns par rapport aux autres dans la direction s'éloignant de la surface d'appui de la tour (1) avec une section transversale diminuant, que le mât en treillis (1) comporte un premier composant (2) guidant et un second composant (3) guidé dans le premier composant (2), que le premier composant (2) comprend un dispositif comportant plusieurs rails (4) disposés dans les coins d'un polygone en tant que cadre d'escalade afin de guider au moins un élément de guidage du second composant (3), que l'élément de guidage est relié aux rails (4) du cadre d'escalade par l'intermédiaire d'au moins un dispositif d'escalade comportant des accouplements, et que le premier composant (2) comporte un élément (10) permettant de supporter l'extrémité ou la zone d'extrémité du second composant (3) dans la position finale et ainsi la position de fonctionnement de l'éolienne.

2. Mât en treillis (1) selon la revendication 1, **caractérisé en ce que** le dispositif d'escalade comporte au moins un moteur de poussée hydraulique.

3. Mât en treillis (1) selon la revendication 1, **caractérisé en ce que** le rail (4) est un rail de profilé (4).

4. Mât en treillis (1) selon la revendication 1, **caractérisé en ce que** l'accouplement, en tant qu'accouplement mobile, est un corps coulissant sur le rail (4) et/ou, au moins par zones dans le rail (4), comportant au moins un dispositif d'arrêt amovible.

5. Mât en treillis (1) selon la revendication 4, **caractérisé en ce que** le dispositif d'arrêt, en tant que dispositif mécanique permettant la fixation du corps coulissant, est respectivement au moins un loquet, un boulon, une vis, un dispositif de serrage et/ou un dispositif tendeur.

6. Mât en treillis (1) selon les revendications 2 et 4, **caractérisé en ce que** les dispositifs d'arrêt sont disposés en fonction de la longueur de poussée du moteur de poussée de telle sorte qu'ils déterminent, en liaison avec le moteur de poussée, la hauteur de levage du second composant (3).

7. Mât en treillis (1) selon la revendication 1, **caractérisé en ce que** le dispositif d'escalade et les accouplements sont un dispositif de déplacement à chenille dans le cadre d'escalade.

8. Mât en treillis (1) selon la revendication 1, **caractérisé en ce que** l'élément (10), pour supporter l'extrémité ou la zone d'extrémité du second composant (3), est conçu sous la forme d'un support et un
élément reliant les zones d'extrémité du premier composant (2) et du second composant (3) l'une à l'autre et transmettant simultanément une force est en position finale et ainsi en position de fonctionnement de l'éolienne, dans lequel les deux parties des supports (7) sont disposées en continu de manière uniaxiale lorsqu'elles sont reliées dans les axes de support.

9. Mât en treillis (1) selon les revendications 1 et 8, **caractérisé en ce que** le mât en treillis (1) comporte au moins trois supports (7) tubulaires, lesquels sont reliés les uns aux autres par une ossature et/ou des poutrelles (8), que le support (7a) du premier composant (2) et le support (7b) du second composant (3) sont reliés l'un à l'autre par l'intermédiaire d'au moins une plaque d'ancrage (9), dans lequel la plaque d'ancrage (9) relie les extrémités planes du support (7a) du premier composant (2) et la surface plane du support (7b) du second composant (3) les unes aux autres de telle sorte que les forces de compression du support (7b) du second composant (3) sont initiées, par l'intermédiaire des forces de cisaillement dans la liaison avec la plaque d'ancrage (9), dans le support (7a) du premier composant (2).

10. Mât en treillis (1) selon la revendication 1, **caractérisé en ce que** le second composant (3) est le support d'une nacelle (5) comprenant les unités et les pales de rotor (6) de l'éolienne.

11. Mât en treillis (1) selon l'une quelconque des revendications 1 et 10, **caractérisé en ce que** les supports (7) sont disposés obliquement les uns par rapport aux autres de telle sorte que la section transversale de la tour (1) déterminée par les supports (7) est réduite en direction de la nacelle de l'éolienne.
